(19) Europäisches Patentamt / European Patent Office / Office européen des brevets

(11) **EP 1 973 185 A1**

(12) **EUROPEAN PATENT APPLICATION**

(43) Date of publication:
**24.09.2008 Bulletin 2008/39**

(51) Int Cl.:
*H01M 8/02* (2006.01)      *H01M 8/04* (2006.01)
*H01M 8/10* (2006.01)

(21) Application number: **08250789.8**

(22) Date of filing: **07.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.03.2007 JP 2007077839**

(71) Applicant: **Kabushiki Kaisha Toshiba**
**Minato-ku**
**Tokyo (JP)**

(72) Inventors:
• **Yagi, Ryosuke**
**Tokyo (JP)**
• **Sato, Yuusuke**
**Tokyo (JP)**
• **Kawano, Koichiro**
**Tokyo (JP)**

(74) Representative: **Granleese, Rhian Jane**
**Marks & Clerk**
**90 Long Acre**
**London**
**WC2A 9RA (GB)**

(54) **Fuel cell**

(57)     A fuel cell includes: a membrane electrode assembly having: an electrolyte membrane, anode and cathode catalyst layers, and anode and cathode gas diffusion layers; a cathode porous body provided at an outer side of the cathode gas diffusion layer; and a cathode member provided at an outer side of the cathode porous body, an inner side of the cathode member having a protruded portion facing to the outer side of the cathode porous body, wherein a pressure is applied to the cathode porous body through the protruded portion of the cathode member so as to compress the cathode porous body.

**FIG. 1**

**Description**

CROSS REFERENCE TO RELATED APPLICATIONS AND INCORPORATED BY REFERENCE

The application is based upon and claims the benefit of priority from the prior Japanese Patent Applications No. P2007-077839, filed on March 23, 2007; the entire contents of which are incorporated herein by reference.

BACKGROUND OF THE INVENTION

1. Field of the Invention

The present invention relates to a fuel cell, more particularly, to a polymer electrolyte fuel cell.

2. Description of the Related Art

As one type of fuel cell, a polymer electrolyte fuel cell is known as having a high output density. In a polymer electrolyte fuel cell, water generated in a cathode reaction and water from an anode that has flowed through an electrolyte membrane to a cathode, is discharged to the outside of the cell as liquid and gas (vapor). The ratio of the liquid and gas changes depending on temperature and other environmental conditions.

When the liquid water accumulates in a cathode gas diffusion layer, the water cannot be completely discharged to the outside and air is less likely to be supplied from an opening of a cathode collector to a region where the water is accumulated. As a result, power generation efficiency of the fuel cell is decreased. In particular, in comparison with a region directly under the opening of the cathode collector, the air is less likely to be supplied to a region directly under lands of the cathode collector in the cathode gas diffusion layer. Accordingly, the liquid water is prone to accumulate in the region under the lands, and the air supply thereto is inhibited.

Accordingly, in order to enhance discharge performance for the liquid water from a cathode catalyst layer to the cathode collector, two methods have been studied. A first method enhances the water repellency of the cathode gas diffusion layer, and a second method for reducing discharge resistance of the liquid by reducing the thickness of the cathode gas diffusion layer.

However, in the above-described methods, discharge resistance of the vapor is decreased simultaneously when the discharge resistance of the liquid water in the cathode gas diffusion layer is decreased. When the discharge resistances of the liquid water and the vapor are decreased, the total discharge amount of moisture, which is the sum of the discharge amount of the liquid water and the discharge amount of the vapor, will be increased. As a result , the polymer electrolyte membrane and the cathode catalyst layer are deprived of moisture, and cathode oxygen reduction reaction is disturbed, sometimes leading to a reduction of power generation efficiency.

SUMMARY OF THE INVENTION

An object of the present invention is to provide a fuel cell, which provides highly efficient power generation in a polymer electrolyte fuel cell.

An aspect of the present invention inheres in a fuel cell including: a membrane electrode assembly having: an electrolyte membrane, anode and cathode catalyst layers provided at both sides of the electrolyte membrane respectively, an anode gas diffusion layer provided at an outer side of the anode catalyst layer, and a cathode gas diffusion layer provided at an outer side of the cathode catalyst layer; a cathode porous body provided at an outer side of the cathode gas diffusion layer; and a cathode member provided at an outer side of the cathode porous body, an inner side of the cathode member having a protruded portion facing to the outer side of the cathode porous body, wherein the inner and outer sides are defined with respect to a location of the electrolyte membrane, and a pressure is applied to the cathode porous body through the protruded portion of the cathode member so as to compress the cathode porous body.

BRIEF DESCRIPTION OF DRAWINGS

Fig. 1 is a cross-sectional view showing a fuel cell according to an embodiment of the present invention;
Fig. 2 is an enlarged view of essential parts of the fuel cell according to the embodiment of the present invention;
Fig. 3 is a graph for explaining intrusion distribution of a cathode porous body of the fuel cell according to the embodiment of the present invention;
Fig. 4 is a graph showing evaluation results of Examples 1 to 3 and Comparative examples 1 and 2 according to the embodiment of the present invention;

Fig. 5 isacross-sectional view showing a fuel cell according to a first modification of the embodiment of the present invention;

Fig. 6 is a cross-sectional view showing another fuel cell according to the first modification of the embodiment of the present invention;

Fig. 7 is a graph showing evaluation results of Examples 4 and 5 and Comparative example 3 according to the first modification of the embodiment of the present invention;

Fig. 8 is a graph showing a relation between time and output Example 6 and Comparative example 4 according to a second modification of the embodiment of the present invention;

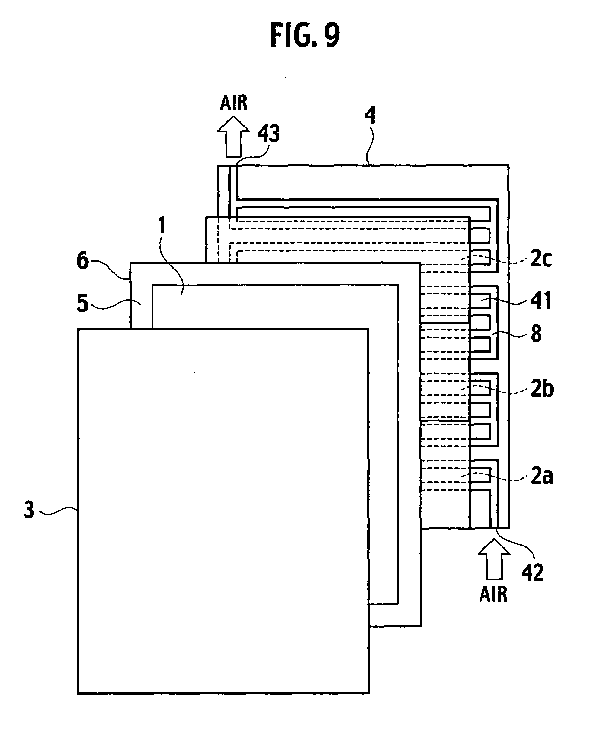

Fig. 9 is a schematic view showing an example of a fuel cell according to a third modification of the embodiment of the present invention; and

Fig. 10 is a graph showing evaluation results of Example 7 and Comparative examples 5 and 6 according to the third modification of the embodiment of the present invention.

DETAILED DESCRIPTION OF THE INVENTION

Various embodiments of the present invention will be described with reference to the accompanying drawings. It is tobe noted that the same or similar reference numerals are applied to the same or similar parts and elements throughout the drawings, and the description of the same or similar parts and elements will be omitted or simplified.

Generally and as it is conventional in the representation of devices, it will be appreciated that the various drawings are not drawn to scale from one figure to another nor inside a given figure, and in particular that the layer thicknesses are arbitrarily drawn for facilitating the reading of the drawings.

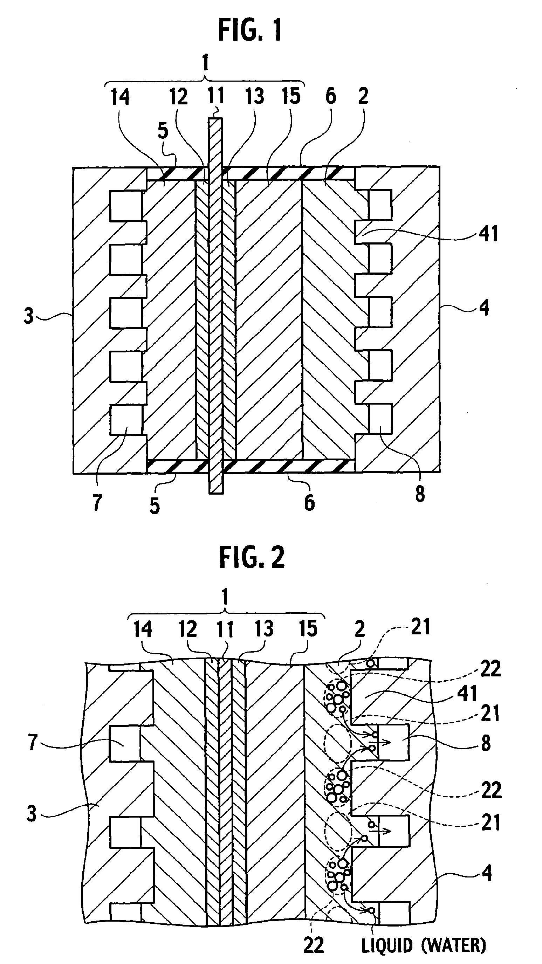

A description will be made of a fuel cell according to an embodiment of the present invention by taking, as an example, a direct methanol fuel cell (DMFC) using a methanol solution as fuel. As shown in FIG. 1, the fuel cell according to the embodiment of the present invention includes a membrane electrode assembly (MEA) 1. The MEA 1 has: an electrolyte membrane 11, the electrolyte membrane 11 is approximately disposed at a central portion of the MEA 1; anode and cathode catalyst layers 12 and 13 arranged at both sides of the central electrolyte membrane 11; an anode cathode gas diffusion layer 14 arranged at the outer side of the anode catalyst layer 12, the inner side of the anode catalyst layer 12 faces to the electrolyte membrane 11 side; and a cathode gas diffusion layer 15 arranged at the outer side of the cathode catalyst layer 13, the inner side of the cathode catalyst layer 13 face to the electrolyte membrane 11.

The fuel cell according to the embodiment of the present invention further includes: a cathode porous body 2 disposed at an outer side of the cathode gas diffusion layer 15, the inner side of the cathode gas diffusion layer 15 faces to the cathode catalyst layer 13; an anode member (anode collector) 3 disposed at an outer side of the anode gas diffusion layer 14, the inner side of the anode gas diffusion layer 14 faces to the anode catalyst layer 12; and a cathode member (cathode collector) 4 disposed at an outer side of the cathode porous body 2, the inner side of the cathode porous body 2 faces to the cathode gas diffusion layer 15. The inner and outer sides are defined with respect to a location of the electrolyte membrane 11. The inner side of the cathode member 4 has protruded portions (lands) 41 in contact with the cathode porous body 2.

A power generation unit composed of the membrane electrode assembly 1, the anode collector 3, the cathode porous body 2 and the cathode collector 4 is clamped from both sides thereof by clamping plates (not shown) . In such a way, a pressure is applied to the cathode porous body 2 through the protruded portions 41 of the cathode member 4 so as to compress the cathode porous body 2. The cathode porous body 2 has a pressure distribution (pressure variation) in a surface thereof due to the pressure applied thereto by the protruded portions 41.

The electrolyte membrane 11 of the membrane electrode assembly 1 is formed by, for example, a polymer electrolyte membrane such as a Nafion membrane (registered trademark), and is proton ($H^+$) conductive. The anode catalyst layer 12 is made of, for example, platinum ruthenium (PtRu) and the like, and generates protons ($H^+$) by an anode reaction. The cathode catalyst layer 13 is made of, for example, platinum (Pt) and the like, and generates water by a cathode reaction.

The anode gas diffusion layer 14 supplies fuel to the anode catalyst layer 12, discharges a product generated by the anode reaction, and operates for current collection. The cathode gas diffusion layer 15 supplies air to the cathode catalyst layer 13, discharges a product generated by the cathode reaction, and the operates for current collection. For example, commercially available carbon paper treated for water repellency by PTFE is usable as the anode gas diffusion layer 14, and commercially available carbon cloth attached to a carbon micro porous layer is usable as the cathode gas diffusion layer 15.

The membrane electrode assembly 1 is fabricated, for example, by bonding the electrolyte membrane 11 on both surfaces of which the anode catalyst layer 12 and the cathode catalyst layer 13 are coated, the anode gas diffusion layer 14, and the cathode gas diffusion layer 15 to one another. Alternatively, the electrolyte membrane 11, the anode gas diffusion layer 14 on which the anode catalyst layer 12 is coated, and the cathode gas diffusion layer 15 on which the cathode catalyst layer 13 is coated may be bonded to one another. The above-described membrane and layers are bonded to one another by high pressure, so that contact resistances of interfaces thereof in contact with the anode catalyst layer 12 and the cathode catalyst layer 13 is decreased.

Here, the fact that the membrane and the layers "are bonded" to one another is defined as a state in which the above-described members are integrated by compression, prior to use in the fuel cell, by a press machine and the like. The compression bonding is so substantial the members are difficult to be separated from one another when the power generation unit is disassembled. Hence, with regard to each of the members after being bonded to one another, the overall thickness of the bonded members is less than the original thickness of the separate members. The fact that the membrane and the layers "are brought into contact" with one another refers to a state where these members are not integrated by being compressed in advance, but are easily separated from one another when the power generationunit is disassembled. Such a state of "contact" is distinguished from such a state of "bonding" .

When the electrolyte membrane 11 including the anode catalyst layer 12 and the cathode catalyst layer 13 coated at both sides thereof is contacted by the anode gas diffusion layer 14 and the cathode gas diffusion layer 15, the compression force provided by the claming force is less than the compression force provided by bonding. Also, alternatively, when the electrolyte membrane 11 is contacted by the anode gas diffusion layer 14 on which the anode catalyst layer 12 is coated and with the cathode gas diffusion layer 15 on which the cathode catalyst layer 13 is coated, the compression force provided by clamping the power generation unit is less than the compression force provided by bonding. Accordingly, such clamping pressure does not permit the electrolyte membrane 11 to be in sufficient contact with the anode catalyst layer 12 and the cathode catalyst layer 13. Thus, in some cases, the interface resistances described above are increased, and power generation efficiency of the fuel cell is decreased. Therefore, it is preferable that these membrane and layers be bonded to one another.

The membrane electrode assembly 1 and the anode collector 3 are positioned to be in contact with each other. The anode collector 3 has an opening 7 for supplying liquid fuel to the anode electrode and discharging unused liquid fuel and the like. For example, a carbon plate or the like may be used as the anode collector 3.

The cathode porous body 2 and the cathode collector 4 are placed in contact with each other. The cathode collector 4 has an opening (recessed portion) 8 for supplying air to the cathode electrode and discharging product such as the water generated by the membrane electrode assembly 1. For example, a carbon plate and the like may be used as the cathode collector 4 . An anode gasket 5 and a cathode gasket 6, whichprevent leakage of the fuel and the air, are arranged on peripheries of the membrane electrode assembly 1 and the cathode porous body 2.

The cathode porous body 2 and the membrane electrode assembly 1 are placed in contact with each other. Carbon paper, carbon cloth, carbon nonwoven fabric, or the like, which is commercially available, can be used as the cathode porous body 2. Water repellency of the carbon paper, the carbon cloth or the carbon nonwoven fabric is adjustable by changing a content of PTFE. The cathode porous body 2 is conductive and water repellent.

Here, the fact that the cathode porous body 2 "is water repellent" refers to a characteristic in which a volume of water repellent pores in the cathode porous body 2 is larger than a volume of hydrophile pores in the cathode porous body 2. It is possible to measure the volumes of the water repellentpores and the hydrophile pores by a method described in Reference (W-k Lee, J.W. Van Zee, Akshaya Jena, and Krishna Gupta. Fuel Cell Seminar, 2004) . When the volume of the water repellent pores obtained by this method is V1 and the hydrophile pores is V2, the fact that the cathode porous body 2 "is water repellent" is defined as a state satisfying an expression $V1 \geqq V2$. When this condition is satisfied, we define this porous body as hydrophobic.

Furthermore, the fact that the cathode porous body 2 "is conductive" refers to characteristics in which the cathode porous body 2 has a higher electric conductivity than that of air. Note that, it is preferable that the electrical resistance of the cathode porous body 2 is less than or equal to 1000 $m\Omega$*cm because power loss by resistance can be restrained so that the electrical resistance is low.

As shown in FIG. 2, the cathode porous body 2 has protruded portion regions (first portions) 22 facing to the protruded portions 41 of the cathode collector 4, and directly under opening regions (second portions) 21 facing to the opening (recessed portion) 8 of the cathode collector 4. The recessed portion 8 is defined between the protruded portion 41at the inner side of the cathode collector 4. A pressure applied to the directly under opening regions 21 is less than a pressure applied to the protruded portionregions22. The protruded portion regions 22 and the opening regions 21 are formed as a result of the following procedure. Specifically, the cathode porous body 2 and the protruded portions 41 of the cathode collector 4 are placed in contact with each other, and the power generation unit is clamped with a predetermined pressure by using the clamping plates or the like, so that the cathode porous body 2 is squeezed by the pressure applied from the protruded portions 41 of the cathode collector 4, and a pressure distribution occurs in the surface of the cathode porous body 2. Moreover, it is desirable that the cathode porous body 2 has a predetermined extent of compressibility so that the pressure distribution can occur in the surface of the cathode porous body 2 by the compression applied when the power generation unit is clamped.

When the cathode porous body 2 and the membrane electrode assembly 1 are bonded to each other, a bonding pressure in this case removes the interface resistances between the gas diffusion layers, the catalyst layers, and the like, and accordingly, is as high as several times the predetermined pressure in the case of clamping the power generation unit . Hence, when the cathode porous body 2 is bonded to the membrane electrode assembly 1 simultaneously with the membrane electrode assembly 1 being formed by bonding the above-described membrane and layers to one another, the entire interior of the surface of the cathode porous body 2 is compressed before clamping the power generation unit. Hence, even if the membrane electrode assembly 1 and the cathode porous body 2 are bonded to each other, and then the cathode collector 4 is placed in contact with the cathode porous body 2,and the power generation unit is then clamped, a pressure variation difference between the protruded portion regions 22 and the opening regions 21 decreases since the cathode porous body 2 is compressed in advance by the stronger bonding pressure. Even if the bonding pressure for the cathode porous body 2 is decreased, as long as the bonding is performed for the entire surface thereof, the pressure variation difference between the protruded portion regions 22 and the opening regions 21 becomes small. Hence, it is preferable that the cathode porous body 2 and the membrane electrode assembly 1 be placed in contact with each other.

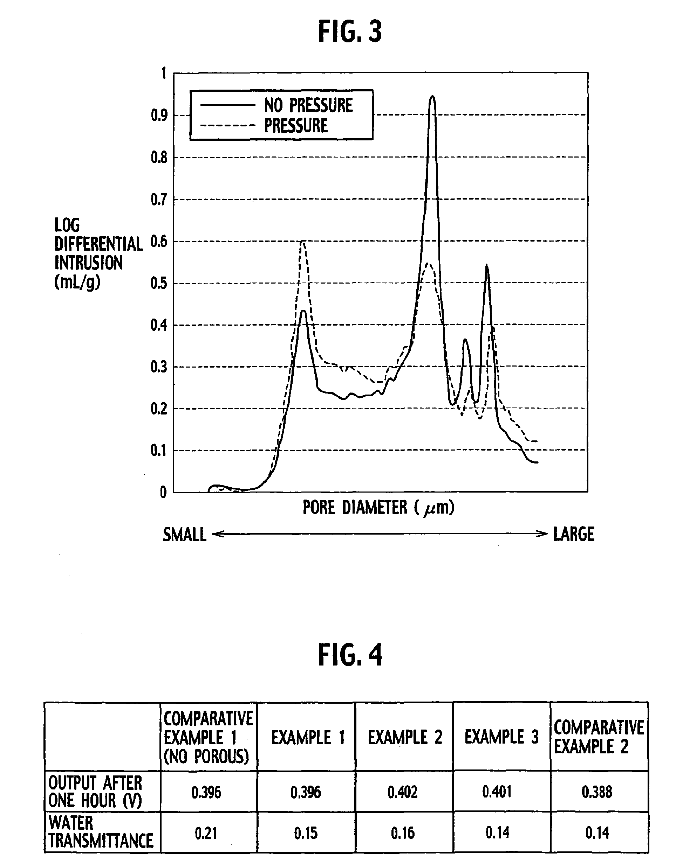

Here, in the protruded portion regions 22, large diameter pores are flattened by application of a high compression pressure. Accordingly, the ratio of small diameter pores with respect to the large diameter pores is higher than in the opening regions 21. FIG. 3 shows a distribution (solid line) of pore diameters in commercially available carbon cloth attached to a carbon micro porous layer with a thickness of 350 $\mu$m when no pressure is applied thereto, and a distribution (dotted line) of pore diameters when a predetermined pressure sufficient to clamp the power generating unit is applied thereto. In FIG. 3, it is understood that, in the case where such a predetermined clamping pressure is applied to the carbon cloth, the ratio of such small diameter pores with respect to such large diameter pores is increased in comparison with the case (region) where the clamping pressure is not applied thereto.

Here, "small diameter pore" is defined as a pore having a diameter, which is smaller than a predetermined diameter, and "large diameter pore" is defined as a pore having a diameter, which is larger than the predetermined diameter. This predetermined diameter pore can be selected from a range of 0.1$\mu$m to 1$\mu$m. Furthermore, the ratio of the volume of the small diameter pores with respect to the large diameter pores in a region in the protruded portion regions 22 where the clamping pressure is applied thereto is larger than the ratio of the volume of the small diameter pores with respect to the large diameter pores in the opening regions 21 where the clamping pressure is not applied thereto. The volume of pores can be measured by mercury intrusion porosimetry.

Capillary attraction $P_c$ of water, which acts in the cathode porous body 2, is represented by the following Expression (1) where surface tension is $\sigma$, a contact angle is $\theta$, a pore radius is r, and a coefficient is J:

$$P_c = (2\sigma\cos\theta/r)J \quad ...(1)$$

Hence, when the cathode porous body 2 is water repellant, the smaller the pore diameter is, the stronger the capillary attraction is, and the liquid discharge capability of the cathode porous body 2 is enhanced. Specifically, the capillary attraction that acts on the protruded portion regions 22 becomes stronger than the capillary attraction that acts on the opening regions 21. Hence, liquid water accumulated in the protruded portion regions 22 is likely to move to the opening regions 21, and is less likely to accumulate in the protruded portion regions 22.

At the time when power is generated by the fuel cell according to the embodiment of the present invention, on the anode side of the fuel cell, the liquid fuel is supplied from the anode collector 3, passes through the anode gas diffusion layer 14, and is supplied to the anode catalyst layer 12. In the anode catalyst layer 12, a reaction according to Formula (2) occurs.

$$CH_3OH + H_2O \rightarrow 6H^+ + 6e^- + CO_2 \qquad (2)$$

Protons ($H^+$) generated in the anode catalyst layer 12 move from the anode catalyst layer 12 through the electrolyte membrane 11 to the cathode catalyst layer 13. Electrons ($e^-$) generated in the anode catalyst layer 12 are carried to the cathode catalyst layer 13 through the anode gas diffusion layer 14, the anode collector 3, an external circuit (not shown), the cathode collector 4, and the cathode porous body 2. $CO_2$ generated in the anode catalyst layer 12 is discharged to the outside through the anode gas diffusion layer 14 and the anode collector 3.

On the cathode side, the air is supplied from the opening 8 of the cathode collector 4, passes through the cathode porous body 2 and the cathode gas diffusion layer 15, and is supplied to the cathode catalyst layer 13. In the cathode catalyst layer 13, the reaction of Formula (3) occurs.

$$4H^+ + 4e^- + O_2 \rightarrow 2H_2O \qquad (3)$$

A part of the water generated in the cathode catalyst layer 13 is reversely diffused to the anode catalyst layer 12 through the electrolyte membrane 11, and the rest thereof permeates the cathode gas diffusion layer 15 and the cathode porous body 2, and is discharged to the outside from the opening 8 of the cathode collector 4.

Moreover, at the same time the protons ($H^+$) generated by the anode catalyst layer 12 move to the cathode catalyst layer 13, a crossover occurs, in which methanol and water that do not react in the anode catalyst layer 12 pass through the electrolyte membrane 11 and move to the cathode catalyst layer 13. The crossover methanol causes a reaction of Formula (4) with oxygen, and water is generated.

$$CH_3OH+3/2O_2 \rightarrow CO_2+2H_2O \qquad (4)$$

In a way similar to the water generated by Reaction formula (3) and to the crossovered water, a part of the water produced in the reaction of formula (4) is reversely diffused to the anode catalyst layer 12 through the electrolyte membrane 11, and the rest thereof permeates the cathode gas diffusion layer 15 and the cathode porous body 2, and is discharged to the outside from the opening 8 of the cathode collector 4. At this time, owing to a difference in capillary attraction between the protruded portion regions 22 and the opening regions 21, the liquid water accumulated in the protruded portion regions 22 is likely to move to the opening regions 21, whereby the liquid water discharge capability of the protruded portion regions 22 can be enhanced. Hence, the air supply to the protruded portion regions 22 is performed efficiently, thus making it possible to enhance the power generation efficiency.

Moreover, the cathode porous body 2 is disposed between the cathode gas diffusion layer 15 and the cathode collector 4, so the gas permeation from the cathode gas diffusion layer 15 to the cathode collector 4 is suppressed. Therefore, in comparison to a case where the cathode porous body 2 is not used, there is increased resistance to movement of vapor from the cathode catalyst layer 13 to the cathode collector 4. As a result, an appropriate amount of water can be retained in the electrolyte membrane 11 and the cathode catalyst layer 13. Therefore, the electrolyte membrane 11 and the cathode catalyst layer 13 are prevented from being dried due to a lack of water, the resistance to movement of the protons is decreased, and the power generation efficiency can be enhanced.

As described above, in accordance with the fuel cell according to the embodiment of the present invention, the power generation efficiency can be enhanced. Moreover, for example, in the case where methanol and water are used for the anode reaction as in the direct methanol fuel cell (DMFC), when the water generated in the cathode catalyst layer 13 passes through the electrolyte membrane 11, thereby increasing the amount of reverse diffusion of the water to the anode catalyst layer 12, the permeation of the water from the anode catalyst layer 12 to the cathode catalyst layer 13 is suppressed. Accordingly, it is possible to raise the methanol concentration of fuel supplied from a fuel cartridge or the like, and fuel utilization efficiency can be enhanced.

Examples 1 to 3 of the fuel cell according to the embodiment of the present invention will be described. First, the Pt-Ru-series anode catalyst layer 12 and the Pt-series cathode catalyst layer 13 were mixed with a perfluorosulfonic acid resin solution (solution with 5 wt% of Nafion), water, and ethylene glycol, followed by agitation. Thereafter, the resultant slurries were spray-coated on PTFE sheets, followed by drying. Next, the abave-described PTFE sheets attached to the anode catalyst layer 12 and the cathode catalyst layer 13 were bonded at a pressure of 100 Kg/cm$^2$ at a temperature of 125 ° C to the polymer electrolyte membrane (Nafion 112) 11 with a thickness of 50 $\mu$m. Thereafter, only the FIFE sheets were peeled off, and the electrolyte membrane 11 attached to the anode catalyst layer 12 and the cathode catalyst layer 13 was fabricated. The amount of coating of the anode catalyst layer 12 onto the electrolyte membrane 11 was 6. 0 mg/cm$^2$, and the amount of coating of the cathode catalyst layer 13 thereon was 3.5 mg/cm$^2$.

The anode gas diffusion layer 14 was prepared with the carbon micro porous layer attached on a surface of water-repellent carbon paper (TGP-H-060, made by Toray Industries, Inc.) that has a thickness of approximately 200 $\mu$m and has 30 wt o of PTFE immersed therein. The carbon micro-porous layer is mainly composed of fine carbon powder (Vulcan-72R) and PTFE . The fine carbon powder and the PTFE were mixed in a weight ratio of 1: 0.66 with water, followed by agitation for 30 minutes. Thereafter, isopropanol was added into a mixture above (mixture of carbon powder, and water) . Thereafter, the mixture thus obtained was subjected to another agitation for five minutes, was sprayed on a surface of the carbon paper in contact with the anode catalyst layer 12, by spraying, and was subjected to a temperature treatment at 100 ° C for one hour and 360 ° C for 30 minutes . In such a way the anode gas diffusion layer 14 with the attached carbon micro- porous layer was formed.

A commercially available carbon cloth was prepared for the cathode gas diffusion layer 15 in which the carbon micro-porous layer was attached on the surface in contact with the cathode catalyst layer 13. The electrolyte membrane 11 attached to the anode catalyst layer 12 and the cathode catalyst layer 13, the anode gas diffusion layer 14 attached to the carbon micro porous layer, and the cathode gas diffusion layer 15 attached to the carbon micro porous layer were bonded to one another at a pressure of 50 kg/cm$^2$ at a temperature of 125°C, so as to provide the membrane electrode assembly 1.

For the cathode porous body 2, a carbon paper with a thickness of about 220 $\mu$m, carbon cloth with a thickness of 235 $\mu$m, and carbon nonwoven fabric with a thickness of 200 $\mu$m, respectively, were prepared for Examples 1 to 3. These porous bodies are commercially available and such porous bodies that are water repellant due topretreatment with PTFE are acceptable for use in the fuel cell.

Each of the anode collector 3 and the cathode collector 4 was prepared with a serpentine flow channel having a flow channel depth of 0.5 mm, a flow channel width of 1 mm, and a land width of 1 mm and formed on a carbon plate with a thickness of 10 mm.

The elements as prepared above were assembled as shown in FIG. 1, and Examples 1 to 3 were fabricated. Moreover, as Comparative example 1, a cathode porous body 2 was not used. As Comparative example 2, a carbon paper similar to that of Example 1 is used as the cathode porous body 2, and the carbon paper is bonded thereto with a pressure of 50 kg/cm$^2$.

For each of Examples 1 to 3 and Comparative examples 1 and 2, water permeability and an output were measured under fixed conditions where the temperature was 60°C, the methanol fuel concentration was 1.2 M, a fuel flow rate was 0.4 ccm, an air flow rate was 90 ccm, and a load current was 1.8 A. The "water permeability" refers to a ratio of the amount of water moving from the anode electrode through the electrolyte membrane 11 to the cathode electrode with respect to the amount of protons moving in the same way as above. The water permeability M0 is defined as in Expression (5) where M1 is the amount (mol/s) of water moving from the anode to the cathode, and M2 is the amount (mol/s) of protons moving from the anode to the cathode.

$$M0=M1/M2 \quad ...(5)$$

Specifically, the fact that the M0 is low means that an amount of the permeating water from the anode to the cathode is suppressed, which leads to higher fuel utilization efficiency as described above.

FIG. 4 shows the water permeability and output characteristics of Examples 1 to 3 and Comparative examples 1 and 2. In FIG. 4, it is understood that, in Examples 1 to 3, the outputs are equivalent to or increased more than that of Comparative example 1, and the water permeability is decreased more than that of Comparative example 1. It is understood that, in Comparative example 2, the output decreases though the water permeability can be decreased more than that of Comparative example 1.

(FIRST MODIFICATION EXAMPLE)

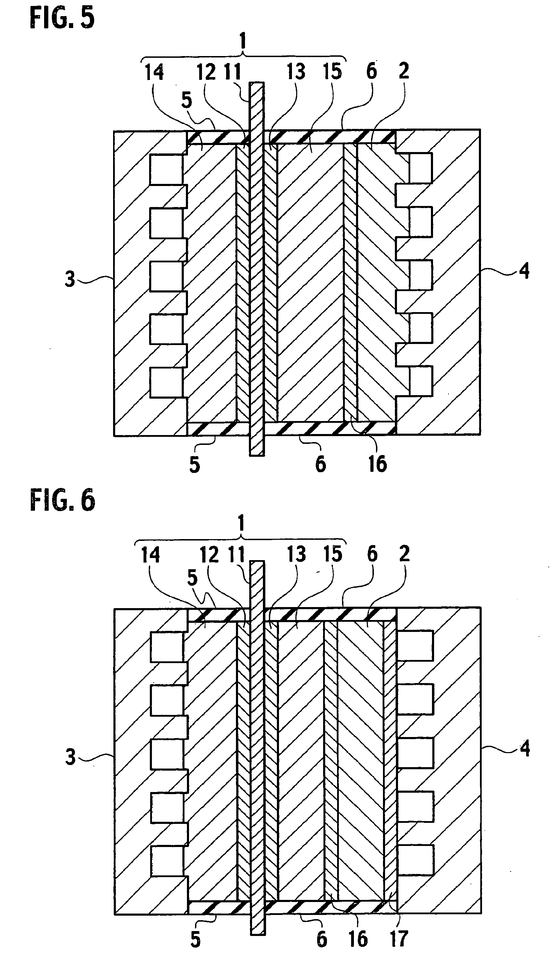

In a first modification example of the embodiment of the present invention, as shown in FIG. 5, a carbon micro porous layer 16 is disposed between the cathode catalyst layer 13 and the cathode gas diffusion layer 15. A micro porous layer (MPL) that is more dense than that of the cathode gas diffusion layer 15 is usable as the carbon micro porous layer 16. It is possible to fabricate the MPL by mixing carbon powder and polytetrafluoroethylene (PTFE) with a solvent to form a slurry, followed by baking at 3 8 0 ° C . The carbon micro porous layer 16 may be directly formed on the surface of the cathode porous body 2, or may be bonded to or placed in contact with the cathode porous body 2.

Moreover, as shown in FIG. 6, a carbon micro porous layer 17 may be disposed between the cathode gas diffusion layer 15 and the cathode collector 4 in addition to the carbon micro porous layer 16 that is disposed between the cathode catalyst layer 13 and the cathode gas diffusion layer 15.

In accordance with the first modification example of the embodiment of the present invention, the carbon micro porous layers 16 and 17 are arranged as shown in FIG. 5 and FIG. 6, whereby the contact resistances of the interfaces with which the carbon micro porous layers 16 and 17 are in contact can be further decreased, thus making it possible to further enhance the power generation efficiency. Moreover, the water permeability can be decreased with this micro-porous layer and fuel utilization efficiency is enhanced.

Examples 4 and 5 of the fuel cell according to the first modification example of the embodiment of the present invention will be described. Example 4 is defined, as shown in FIG. 5, as having the carbon micro porous layer 16 formed on the surface where the cathode porous body 2 is in contact with the cathode gas diffusion layer 15. Example 5 is defined, as shown in FIG. 6, as having the carbon micro porous layers 16 and 17 formed on both surfaces of the cathode porous body 2.

The carbon micro porous layers 16 and 17 were formed by mixing the carbon fine powder (Vulcan-72R) and the PTFE in a weight ratio of 1: 0. 66, and the mixed slurry thus obtained was sprayed on the surfaces of the cathode porous body 2, and thereafter, was subjected to a high-temperature treatment at 100°C for one hour and 360°C for 30 minutes.

Carbon paper with a thickness of approximately 200 $\mu$m was used as the cathode porous body 2. The thickness of the carbon paper after the carbon micro porous layers 16 and 17 were formed thereon will be explained for two cases. First, the thickness in the case where the carbon micro porous layer was formed only on one of the surfaces was 250 $\mu$m. Secondly, the thickness in the case where the carbon micro porous layers were formed on both of the surfaces was 300 $\mu$m. As the membrane electrode assembly 1, the anode collector 3 and the cathode collector 4, an assembly similar to those used in Example 1 were prepared.

The layers as prepared above were assembled, and Examples 4 and 5 were fabricated. Moreover, for Comparative example 3, an assembly was fabricated that did not include the cathode porous body or the carbon micro porous layers.

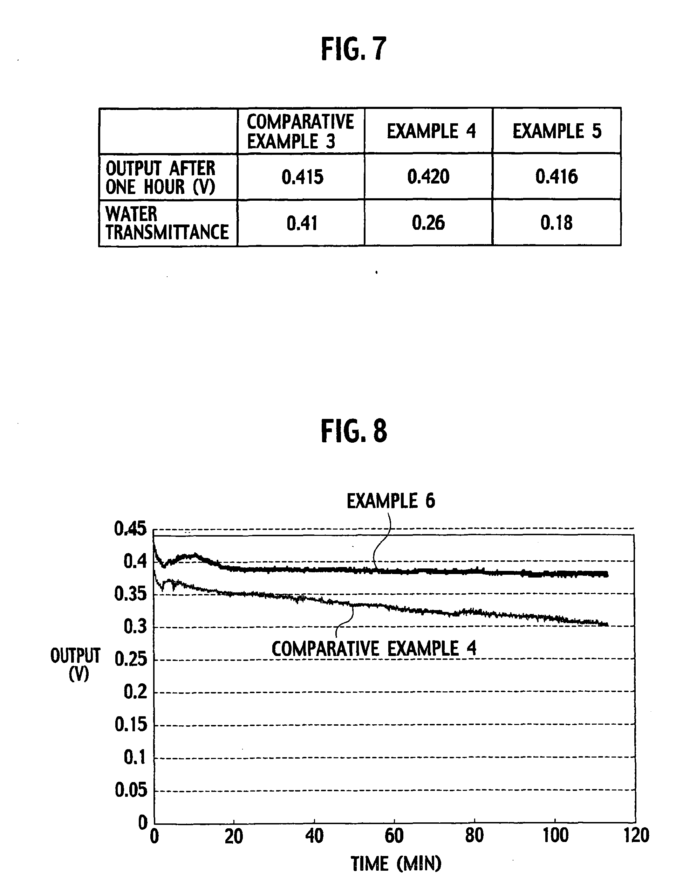

For each of Examples 4 and 5 and Comparative example 3, tests of the water permeability and the output were performed under operation conditions where the temperature of the power generation unit was 60°C, the fuel concentration was 1.2 M, the air flow rate was 120 ccm, and the load current was at a predetermined value. FIG. 7 shows tests results of Examples 4 and 5 and Comparative example 3. In FIG. 7, it is understood that, in Example 4, the output is 0.420V, the water permeability is 0.26, and in comparison with Comparative example 3, the output is 0.415V and the waterpermeability is 0.41. In the two examples, the output is increased, and the water permeability is suppressed. Moreover, it is understood that, in Example 5, the output is 0.416V, the water permeability is 0.18, and in comparison with Comparative example 3, the water permeability is suppressed to a large extent though the output is hardly changed.

(SECOND MODIFICATION EXAMPLE)

As a second modification example of the embodiment of the present invention, an example where a structure of the cathode member (cathode collector) 4 differs from the other examples will be described. The cathode member (cathode collector) 4 just needs to form the pressure distribution for the cathode porous body 2 at the same time of supplying the air to the cathode porous body 2 and discharging the water from the cathode porous body 2. For example, the cathode member 4 may have an air breathing structure to directly take in the air, and it is also possible to form a flow channel on the cathode member 4.

In Example 6 of the fuel cell according to the second modification example of the embodiment of the present invention, a membrane electrode assembly 1, similar to that of Example 1, was used, and the cathode collector 4 with the air breathing structure was used. An anode collector 3 having a flow channel similar to that of Example 1 was used. Carbon paper having a thickness of 700 $\mu$m and already subjected to water repellent treatment by PTFE of 30 wt% was used as the cathode porous body 2. The structures, as prepared above, were assembled and Example 6 was fabricated. Moreover, as Comparative example 4, a structure similar to Example 6, except that the cathode porous body is not provided, was fabricated.

For each of Example 6 and Comparative example 4, the tests of the output and the water permeability were performed under operation conditions where the temperature of the power generation unit was 60°C, the fuel concentration was 1.2 M, the fuel flow rate was 0.4 ccm, and the load current was 1.8 A. FIG. 8 shows test results of Example 6 and Comparative example 4. In FIG. 8, it is understood that, in Example 6, the output is increased more than in Comparative example 4.

(THIRD MODIFICATION EXAMPLE)

As a third modification example of the embodiment of the present invention, an example where the structure of the cathode member (cathode collector) 4 differs from that in the other examples will be described. The cathode collector 4 includes the flow channel (opening) 8, with a serpentine shape, on the side thereof in contact with the cathode porous body 2. Regions sandwiched by serpentine lines of the flow channel (opening) 8 form the protruded portions 41. The flow channel 8 supplies, from a supply port 42, the air for use in the reaction in the cathode catalyst layer 13, and discharges, from a discharge port 43, the water generated by the reaction in the cathode catalyst layer 13 and the crossovered water.

The cathode porous body 2 is divided into three sections, and includes a first cathode porous body 2a disposed on the supply port 42 side (upstream side) in the flow channel 8, a second cathode porous body 2b disposed on a midstream side, and a third cathode porous body 2c disposed on the discharge port 43 side (downstream side). Gas permeability of the first cathode porous body 2a is the lowest among the first to third cathode porous bodies 2a to 2c. The "gas permeability" refers to a flow rate of the air that flows in the cathode porous body 2 when the air is supplied to the cathode porous body 2 at a predetermined pressure. The gas permeability of the third cathode porous body 2c is the highest among the first to third cathode porous bodies 2a to 2c.

When the air flows through the flow channel 8 of the cathode collector 4, atmospheric air in an unsaturated state flows on the upstream side in the flow channel 8. On the midstream side, the degree of saturation of the air is increased from the unsaturated state by the water discharged from the cathode porous body 2 on the upstream side. On the downstream side, water discharged from the cathode porous body 2 on the midstream side is also added. Accordingly, an air flow containing liquid droplets occurs due to a high degree of saturation or oversaturation. Hence, closer to the upstream side, the electrolyte membrane 11 is more prone to be dried by the fact that moisture is deprived therefrom by the air. Closer to the downstream side, the liquid droplets are accumulated more in the cathode catalyst layer 13 and the cathode gas diffusion layer 15, and the supply of air therethrough is prone to be hindered.

By the first to third cathode porous bodies 2a to 2c, an amount of the permeating gas is gradually increased as the gas is going from the upstream side in the flow channel 8 to the downstream side. As a result, on the upstream side in the flow channel 8, an amount of the vapor that moves from the cathode gas diffusion layer 15 to the cathode collector 4 can be relatively suppressed, and the cathode gas diffusion layer 15 can be prevented from being dried. Moreover, on the downstream side in the flow channel 8, exchange of the vapor and the air occurs smoothly, thus making it possible to enhance the power generation efficiency.

As described above, the plural types of cathode porous bodies 2a to 2c, different in characteristics from one another, are used as one piece of the membrane electrode assembly 1, whereby unevenness in the surfaces of the membrane electrodes caused by the air flow is suppressed, thus making it possible to achieve high power generation efficiency.

Moreover, if plural types of the cathode gas diffusion layers 15 are used in order to change the amount of the gas permeating the same on the upstream side, the midstream side, and the downstream side, then such unevenness in the surfaces and distortion thereof sometimes occur when the membrane electrodes are bonded to one another as constituents of the membrane electrode assembly 1. When the membrane electrodes are bonded to one another while retaining the unevenness in the surfaces thereof the interface resistances are increased among the anode catalyst layer 12, the cathode catalyst layer 13, and the electrolyte membrane 11, between the anode catalyst layer 12 and the anode gas diffusion layer 14, and between the cathode catalyst layer 13 and the cathode gas diffusion layer 15. As a result, performance of the membrane electrode assembly 1 is decreased.

On the other hand, in the case of using the plural types of the cathode porous bodies 2a to 2c, the first to third cathode porous bodies 2a to 2c are put into contact with the membrane electrode assembly 1 after the membrane electrode assembly 1 is formed by bonding the membrane and the layers to one another. Hence, even if the first to third cathode porous bodies 2a to 2c are different from one another in thickness, elasticity, and plasticity, the unevenness in the surfaces or the distortion thereof do not occur when the membrane electrode assembly 1 is formed by bonding. A method as described above, in which the first to third cathode porous bodies 2a to 2c are put into contact with the membrane electrode assembly 1 after the membrane electrode assembly 1 is formed by bonding, is effective also from a viewpoint of preventing a reduced performance of the membrane electrode assembly 1.

Note that, in the third modification example of the embodiment of the present invention, a description has been made of the three types (first to third) cathode porous bodies 2a to 2c. However, a plurality of the cathode porous bodies, differing only in the amount of permeating gas between the region likely to be dried and the region where water clogging is prone to occur, is required. For example, four or more types of cathode porous bodies may be used, or two types of cathode porous bodies may be used on the upstream side and the downstream side.

Example 7 of the fuel cell according to the third modification example of the embodiment of the present invention will be described. As the membrane electrode assembly 1, one similar to that of Example 1 was prepared, and the anode collector 3 and the cathode collector 4, in each of which the serpentine flow channel was formed, were used. As the cathode porous body, two types of cathode porous bodies were used on the upstream and the downstream sides in the flow channel formed on the cathode collector 4. On the upstream side in the serpentine flow channel, carbon cloth attached to a carbon micro porous layer and having low gas permeability ($K=0.5\times10^{-13}\,m^2$) was used. On the downstream side, carbon cloth attached to a carbon micro porous layer and having high gas permeability ($K=1.3\times10^{-13}\,m^2$) was used. The cathode porous bodies as prepared above were assembled, and Example 7 was fabricated. Moreover, as Comparative example 5, a carbon porous body was fabricated, in which only the carbon cloth having low gas permeability, as was used on the upstream side in the cathode porous body 2 of the fuel cell of Example 7, was used for the entire surface. As Comparative example 6, a carbon porous body was fabricated, in which only carbon cloth having a high gas permeability, as used on the downstream side in the cathode porous body 2 of the fuel cell of Example 7, was used for the entire surface.

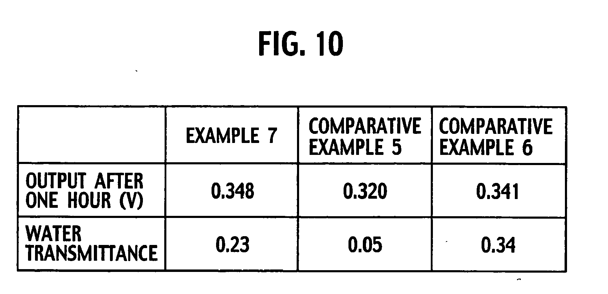

For each of Example 7 and Comparative examples 5 and 6, the tests of the output by the fuel cell and the water permeability were performed under operation conditions where the temperature of the power generation unit was 60°C, the fuel concentration was 2.0 M, the fuel flow rate was 0.24 ccm, the air flow rate was 80 ccm, and the load current was 1.8 A. FIG. 10 shows test results of the output and the water permeability. In FIG. 10, it can be confirmed that, in the case of Example 7, the output is 0.348V, which is higher than in Comparative examples 5 and 6, and the water permeability can be suppressed more than in Comparative example 6.

(OTHER EMBODIMENT)

Various modifications will become possible for those skilled in the art after receiving the teachings of the present disclosure without departing from the scope thereof.

For example, the construction on the anode side is not limited as the structure including the anode catalyst layer 12, the anode gas diffusion layer 14, and the anode corrector3 shown in Fig. 1. For example, a carbon micro porous layer may be provided between the anode catalyst layer 12 and the anode gas diffusion layer 14. Furthermore, the anode collector 3 may be a conductor for supplying fuel, or a flow channel plate including a gas/liquid separation mechanism.

Furthermore, in the case where another member collects current instead of the cathode member 4, the cathode member 4 may not be conductive.

**Claims**

1. A fuel cell comprising:

   a membrane electrode assembly comprising:

      an electrolyte membrane,
      anode and cathode catalyst layers provided at

   both sides of the electrolyte membrane respectively,

      an anode gas diffusion layer provided at an outer side of the anode catalyst layer, and
      a cathode gas diffusion layerprovidedat an outer side of the cathode catalyst layer;

      a cathode porous bodyprovided at an outer side of the cathode gas diffusion layer; and
      a cathode member provided at an outer side of the cathode porous body, an inner side of the cathode member having a protruded portion facing to the outer side of the cathode porous body,

   wherein the inner and outer sides are defined with respect to a location of the electrolyte membrane, and a pressure is applied to the cathode porous body through the protruded portion of the cathode member so as to compress the cathode porous body.

2. The fuel cell of claim 1, wherein the outer side of the cathode porous body comprises:

      a first region facing to the protruded portion; and
      a second region facing to a recessed portion of the cathode member, the recessed portion is defined between the protruded portions at the inner side of the cathode member,

   wherein a pressure applied to the second region through the protruded portion is smaller than a pressure applied to the first region.

3. The fuel cell of claim 2, wherein a ratio of a volume of pores having a small diameter to a volume of pores having a large diameter in the first region is higher than in the second region.

4. The fuel cell of any preceding claim, wherein the cathode porous body is conductive and water repellent.

5. The fuel cell of any preceding claim, wherein a material of the cathode porous body is selected one of a group consisting of carbon paper, carbon cloth, and carbon nonwoven fabric.

6. The fuel cell of any preceding claim, further comprising a carbon micro porous layer between the cathode gas diffusion layer and the cathode porous body.

7. The fuel cell of any of claims 1 to 5, further comprising a carbon micro porous layer between the cathode porous body and the cathode member.

8. The fuel cell of any preceding claim, wherein the cathode member is conductive and collects current.

9. The fuel cell of claim 1, wherein the cathode member comprises a flow channel configured to provide air to the cathode porous body and to discharge fluid from the cathode porous body.

10. The fuel cell of claim 9, wherein the cathode porous body comprises:

a first cathode porous body provided at an upper stream side of the flow channel; and
a second cathode porous body provided at a lower stream side of the flow channel, and having a gas permeability higher than that of the first cathode porous body.

11. The fuel cell of claim 1, further comprising ananode collector in contact with the membrane electrode assembly.

12. The fuel cell of claim 1, wherein an assembly comprising the electrolyte membrane, the anode catalyst layer and the cathode catalyst layer coated on both sides of the electrolyte membrane is bonded to the anode gas diffusion layer.

13. The fuel cell of claim 1, wherein an assembly comprising the electrolyte membrane, the anode catalyst layer and the cathode catalyst layer coated on both sides of the electrolyte membrane is bonded to the cathode gas diffusion layer.

14. The fuel cell of any preceding claim, wherein the electrolyte membrane is bonded to the anode gas diffusion layer through the anode catalyst layer, the anode catalyst layer is coated on the anode gas diffusion layer.

15. The fuel cell of any preceding claim, wherein the electrolyte membrane is bonded to the cathode gas diffusion layer through the cathode catalyst layer, the cathode catalyst layer is coated on the cathode gas diffusion layer.

16. The fuel cell of any preceding claim, wherein the cathode member is in contact with the cathode porous body.

17. The fuel cell of any of claims 1 to 15, wherein the cathode porous body is in contact with the membrane electrode assembly.

18. The fuel cell of any preceding claim, wherein the cathode porous body has compressibility.

19. The fuel cell of claim 10, wherein the cathode porous body further comprises a third cathode porous body provided at a lower stream side of the flow channel, and having a gas permeability higher than that of the first and second cathode porous bodies.

20. The fuel cell of any preceding claim, further comprising a carbon micro porous layer between the anode catalyst layer and the anode gas diffusion layer.

EP 1 973 185 A1

## FIG. 1

## FIG. 2

## FIG. 3

## FIG. 4

| | COMPARATIVE EXAMPLE 1 (NO POROUS) | EXAMPLE 1 | EXAMPLE 2 | EXAMPLE 3 | COMPARATIVE EXAMPLE 2 |
|---|---|---|---|---|---|
| OUTPUT AFTER ONE HOUR (V) | 0.396 | 0.396 | 0.402 | 0.401 | 0.388 |
| WATER TRANSMITTANCE | 0.21 | 0.15 | 0.16 | 0.14 | 0.14 |

# FIG. 5

# FIG. 6

## FIG. 7

|  | COMPARATIVE EXAMPLE 3 | EXAMPLE 4 | EXAMPLE 5 |
|---|---|---|---|
| OUTPUT AFTER ONE HOUR (V) | 0.415 | 0.420 | 0.416 |
| WATER TRANSMITTANCE | 0.41 | 0.26 | 0.18 |

## FIG. 8

EXAMPLE 6

COMPARATIVE EXAMPLE 4

OUTPUT (V)

TIME (MIN)

# FIG. 9

# FIG. 10

|  | EXAMPLE 7 | COMPARATIVE EXAMPLE 5 | COMPARATIVE EXAMPLE 6 |
|---|---|---|---|
| OUTPUT AFTER ONE HOUR (V) | 0.348 | 0.320 | 0.341 |
| WATER TRANSMITTANCE | 0.23 | 0.05 | 0.34 |

**European Patent Office**

**EUROPEAN SEARCH REPORT**

Application Number

EP 08 25 0789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/214057 A1 (FUGLEVAND WILLIAM A [US] ET AL) 28 October 2004 (2004-10-28) * figures 2-4,9 * * paragraphs [0002], [0040], [0048] - [0055] * ----- | 1-11, 18-20 | INV. H01M8/02 H01M8/04 H01M8/10 |
| X | WO 2006/101132 A (TOKYO SHIBAURA ELECTRIC CO [JP]; YAJIMA AKIRA [JP]; TAKIZAWA YUMIKO [J) 28 September 2006 (2006-09-28) * abstract * * figure 1 * & EP 1 863 111 A (TOSHIBA KK [JP]) 5 December 2007 (2007-12-05) * paragraphs [0017] - [0020], [0024] * * figure 1 * ----- | 1-3,8,9, 11-13,18 | |
| X | WO 2004/008557 A (UTC FUEL CELLS LLC [US]) 22 January 2004 (2004-01-22) * page 11, line 18 - page 12, line 21 * * figure 2 * ----- | 1-5,9, 11,16-18 | |
| X | DE 10 2005 011853 A1 (GEN MOTORS CORP [US]) 10 November 2005 (2005-11-10) * paragraphs [0011], [0025], [0026], [0028] - [0032], [0035] * * figure 3 * ----- | 1-3,8,9, 18 | TECHNICAL FIELDS SEARCHED (IPC) H01M |
| X | JP 2004 127566 A (MITSUBISHI MATERIALS CORP) 22 April 2004 (2004-04-22) * abstract * * figures 1,2,5 * ----- | 1-3,9, 11,14, 15,18 | |

The present search report has been drawn up for all claims

| Place of search | Date of completion of the search | Examiner |
|---|---|---|
| The Hague | 27 June 2008 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 0789

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2008

| Patent document cited in search report | Publication date | Patent family member(s) | | Publication date |
|---|---|---|---|---|
| US 2004214057 A1 | 28-10-2004 | WO | 2004097960 A1 | 11-11-2004 |
| WO 2006101132 A | 28-09-2006 | CN | 101147287 A | 19-03-2008 |
| | | EP | 1863111 A1 | 05-12-2007 |
| | | KR | 20070103068 A | 22-10-2007 |
| | | US | 2008014491 A1 | 17-01-2008 |
| EP 1863111 A | 05-12-2007 | CN | 101147287 A | 19-03-2008 |
| | | WO | 2006101132 A1 | 28-09-2006 |
| | | KR | 20070103068 A | 22-10-2007 |
| | | US | 2008014491 A1 | 17-01-2008 |
| WO 2004008557 A | 22-01-2004 | AU | 2003253803 A1 | 02-02-2004 |
| | | DE | 10392922 T5 | 30-06-2005 |
| | | JP | 2005533352 T | 04-11-2005 |
| | | US | 2004009383 A1 | 15-01-2004 |
| DE 102005011853 A1 | 10-11-2005 | US | 2005208366 A1 | 22-09-2005 |
| JP 2004127566 A | 22-04-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2007077839 B

**Non-patent literature cited in the description**

- **W-K LEE ; J.W. VAN ZEE ; AKSHAYA JENA ; KRISHNA GUPTA.** *Fuel Cell Seminar,* 2004